# EUROPEAN PATENT APPLICATION

(11) **EP 4 708 260 A1**
(43) Date of publication of application: **11.03.2026**
(21) Application number: 24800025.9
(22) Date of filing: 04.03.2024
(51) Int. Cl.: G09C 1/00, G06F 16/24

(54) **ANALYSIS DEVICE, ANALYSIS METHOD, AND ANALYSIS PROGRAM**

(30) Priority: 01.05.2023 JP 2023075832
(71) Applicant: NTT DOCOMO BUSINESS, Inc., Tokyo 100-8019 (JP)
(72) Inventor: TANAKA, Satoshi, Tokyo 100-8019 (JP); SAKURAI, Yoichi, Tokyo 100-8019 (JP); SAWADA, Masashi, Tokyo 100-8019 (JP); YAMAGIWA, Ryuta, Tokyo 105-6309 (JP)
(74) Representative: Hoffmann Eitle
(86) International application number: PCT/JP2024/007990
(87) International publication number: WO 2024/228294

(57) **Abstract**

An analysis device according to an embodiment includes a sorting unit and a deletion unit. The sorting unit sorts records of a table including records in which values of a first key (overlap deletion key) overlap by secure computation using a second key (sort key) different from the first key. The deletion unit deletes records other than one record at a predetermined position in a set by secure computation for each of the sets of the records which is included in the table subjected to sorting by the sorting unit and in which the first key overlaps.

## Description

### Field

The present invention relates to an analysis device, an analysis method, and an analysis program.

### Background

In the related art, a secure computation system that performs statistical calculation while keeping data secret and provides a user with a statistic obtained as a result of the calculation is known. For example, the secure computation system may be used for analysis of data in a medical field or the like that handles important personal information.

In addition, a method of performing an operation on a table using secure computation is known (See, for example, Patent Literature 3).

### Citation List

### Patent Literature

Patent Literature 1: WO 2019/124260 A
Patent Literature 2: JP 2020-042128 A
Patent Literature 3: JP 2014-139640 A

### Non Patent Literature

Non Patent Literature 1: NTT Corp., System of Secure Computation and Principles thereof, [online], [searched on November 24, 2022], Internet <URL:https://www.rd.ntt/sil/project/sc/secure_computation.h tml>

### Summary

### Technical Problem

However, in the technique in the related art, there may be a case where it is not possible to designate a record to be left at the time of table overlap deletion by secure computation.

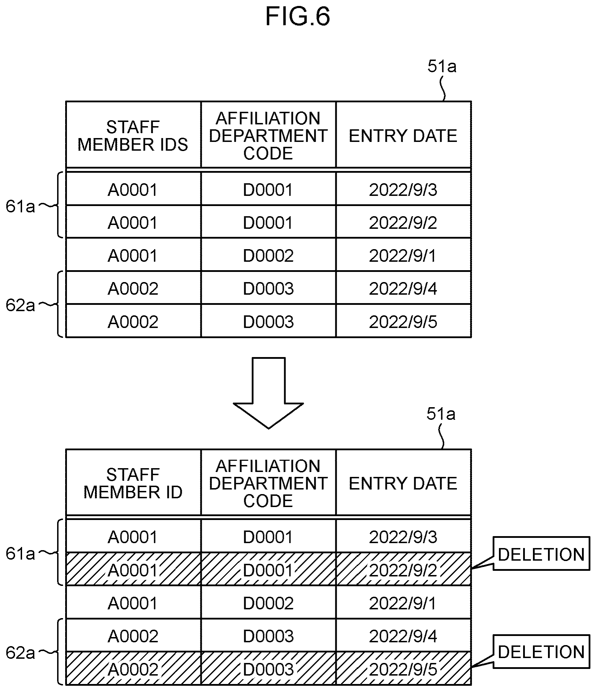

FIG. 6 is a diagram illustrating a procedure of overlap deletion in the related art. Here, the record in which the "staff member ID" column and the "affiliation department code" column (hereinafter, referred to as an overlap deletion key) overlap is deleted except for one. Therefore, a record group 61a and a record group 62a of a table 51a in FIG. 6 are to be subjected to overlap deletion.

In a record included in a record group to be subjected to the overlap deletion, the overlap deletion key is common, but for example, values in an "entry date" column are different from each other. Therefore, it is considered that there may be a request to leave a record, for example, with the latest "entry date" at the time of overlap deletion.

Meanwhile, in the overlap deletion in the related art, which record is to be deleted among records included in a record group to be subjected to the overlap deletion is randomly determined in some cases. Therefore, the desired record may not remain after the overlap deletion. Solution to Problem

In order to solve the above-described problems and achieve the object, an analysis device includes: a sorting unit that sorts records of a table including records in which values of a first key overlap by secure computation using a second key different from the first key; and a deletion unit that deletes records other than one record at a predetermined position in a set by secure computation for each of the sets of the records which is included in the table subjected to sorting by the sorting unit and in which the first key overlaps.

### Advantageous Effects of Invention

According to the present invention, it is possible to designate a record to be left at the time of overlap deletion of a table by secure computation.

### Brief Description of Drawings

FIG. 1 is a diagram illustrating a configuration example of an analysis system according to an embodiment.
FIG. 2 is a diagram illustrating a configuration example of an analysis device according to the embodiment.
FIG. 3 is a diagram illustrating a procedure of overlap deletion according to the embodiment.
FIG. 4 is a flowchart illustrating a flow of processing of the analysis device according to the embodiment.
FIG. 5 is a diagram illustrating an example of a computer that executes an analysis program.
FIG. 6 is a diagram illustrating a procedure of the overlap deletion in the related art.

### Description of Embodiments

Hereinafter, embodiments of an analysis device, an analysis method, and an analysis program according to the present application are described in detail with reference to the drawings. Note that the present invention is not limited to the embodiments described below.

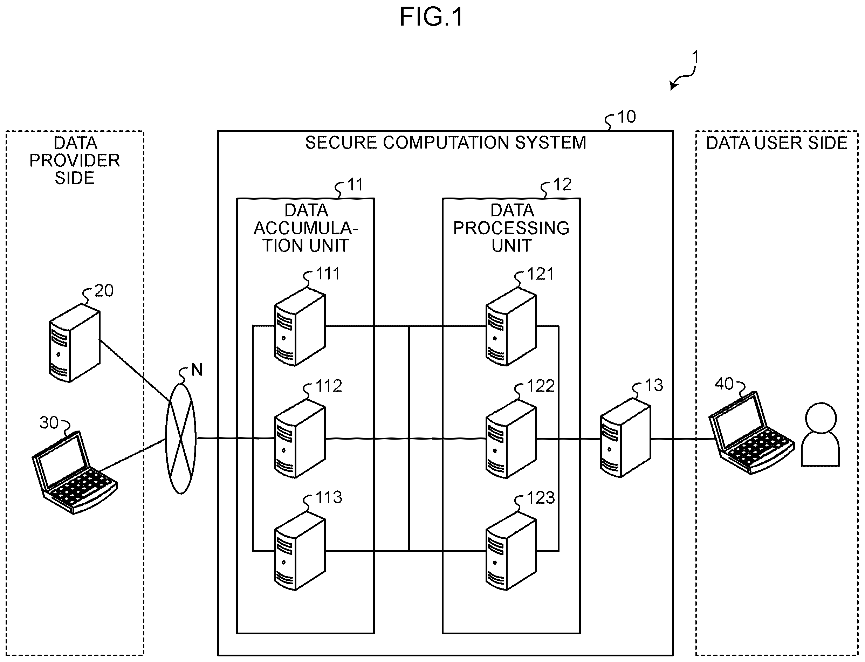

First, a configuration of an analysis system is described with reference to FIG. 1. The analysis system is a system for analyzing data using secure computation.

As illustrated in FIG. 1, an analysis system 1 includes a secure computation system 10. Furthermore, the secure computation system 10 is connected to a providing device 20 and a providing device 30 via a network N. For example, the network N is the Internet. In addition, the secure computation system 10 is connected to a terminal device 40.

The providing device 20 and the providing device 30 are devices on the data provider side. The providing device 20 and the providing device 30 provide (register) data to the secure computation system 10.

The data provided by the providing device 20 and the providing device 30 includes information (for example, personal information such as a name and an address of an individual) which is desirably concealed. For example, the providing device 20 and the providing device 30 provide data related to a receipt and a diagnosis procedure combination (DPC) used in a medical institution.

The secure computation system 10 includes a data accumulation unit 11 and a data processing unit 12. The data accumulation unit 11 includes a plurality of accumulation devices (an accumulation device 111, an accumulation device 112, and an accumulation device 113) that accumulate data by secret sharing. In addition, the data processing unit 12 includes a plurality of calculation devices (a calculation device 121, a calculation device 122, and a calculation device 123) that process data by secure computation. Note that the number of accumulation devices and the number of calculation devices are not limited to the example illustrated in FIG. 1.

The secure computation system 10 can perform secret sharing and secure computation according to the method described in Non-Patent Literature 1 (posted URL: https://www.rd.ntt/sil/project/sc/secure_computation.html).

First, the data provided to the secure computation system 10 is divided (fragmented) into a plurality of shares. Then, the plurality of shares are distributed into and accumulated in a plurality of accumulation devices included in the data accumulation unit 11. In the example of FIG. 1, the provided data is divided into three shares. Then, the accumulation device 111, the accumulation device 112, and the accumulation device 113 accumulate shares one by one.

The data processing unit 12 performs secure computation on the share accumulated in the data accumulation unit 11. The data processing unit 12 executes secure computation by multi-party computation using a plurality of calculation devices. In the example of FIG. 1, the data processing unit 12 executes secure computation by the calculation device 121, the calculation device 122, and the calculation device 123.

The data processing unit 12 can perform various statistical operations without restoring the share. For example, the data processing unit 12 can perform an operation of a table such as sorting and combining, aggregation of the number of records, calculation of statistics such as a total sum, an average, a maximum value, a minimum value, and a sample variance, and a statistical test such as t-test. Furthermore, the data processing unit 12 can perform statistical analysis such as regression analysis and principal component analysis.

An analysis device 13 analyzes data using the data processing unit 12. The analysis device 13 provides an analysis result to the terminal device 40 on the data user side based on the result of the secure computation executed by the data processing unit 12. The user can obtain an analysis result of data via the terminal device 40.

For example, the secure computation system 10 may be provided with data related to attributes and bodies for each individual. The data related to the attribute and the body is personal information that is desirably concealed. The data related to the attributes and the bodies includes, for example, ages, genders, heights, weights, and the like. The data accumulation unit 11 stores a share obtained by fragmenting the provided data in each accumulation device.

Note that each divided share is data that is singly meaningless. Therefore, the original data cannot be restored from one share. Meanwhile, it is possible to restore the original data by gathering a plurality of shares.

The user of the data cannot view the registered data itself but can view the analysis result of the data via the analysis device 13 and the terminal device 40. For example, when the data includes the gender and the weight of an individual, the user cannot view the gender and the weight of each individual but can view the "average weight of men" that is an analysis result of the data.

As an example, the data accumulation unit 11 can perform secret sharing by using a technique referred to as Shamir's threshold secret sharing method. At this time, the data accumulation unit 11 stores, as shares, three coordinates passing through a polynomial having the original data as an intercept in each server. In addition, since the inclination of the polynomial is randomly determined, even if the original data is the same, the share is not necessarily the same every time. The original data may be a numerical value or data converted into a numerical value.

The secure computation system 10 can restore the original data from a plurality of shares. If the polynomial is a linear expression, the secure computation system 10 can obtain the intercept (corresponding to the original data) from the intersection of a straight line connecting the two coordinates (corresponding to the share) and an axis. Meanwhile, since a straight line is not determined from one coordinate, the original data cannot be restored.

In addition, as described above, the data processing unit 12 can perform secure computation on the original data without restoring the share. For example, the result of adding the shares represented by the coordinates corresponds to the share of the result of adding the original data of each share.

The analysis device 13 causes the data processing unit 12 to execute processing by secure computation in response to a request from the terminal device 40. Note that the data processing unit 12 or the terminal device 40 may embody a function equivalent to that of the analysis device 13. For example, the analysis system 1 may be a configuration not including the analysis device 13. In that case, the terminal device 40 is connected to the data processing unit 12 and executes processing equivalent to that of the analysis device 13. Furthermore, the statistical operation based on the share may be executed by the terminal device 40 instead of the data processing unit 12.

In a first embodiment, an example in which the analysis device 13 performs overlap deletion of a table by secure computation is described. Note that the table to be subjected to overlap deletion by the analysis device 13 is, for example, a table included in a relational database (RDB) in which a plurality of tables are associated.

As already described with reference to FIG. 6, the technique in the related art has a problem that a record to be left cannot be designated at the time of overlap deletion in some cases. Meanwhile, the analysis device 13 of the first embodiment can perform overlap deletion of the table by secure computation while leaving the designated record.

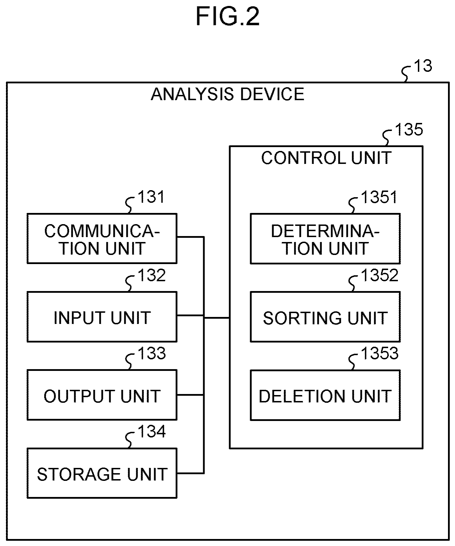

A configuration of the analysis device 13 is described with reference to FIG. 2. FIG. 2 is a diagram illustrating a configuration example of the analysis device according to the embodiment.

Each unit of the analysis device 13 is described. As illustrated in FIG. 2, the analysis device 13 includes a communication unit 131, an input unit 132, an output unit 133, a storage unit 134, and a control unit 135.

The communication unit 131 performs data communication between other devices. For example, the communication unit 131 is a network interface card (NIC). The communication unit 131 can transmit and receive data to and from other devices.

The input unit 132 is an interface for receiving input of data. The input unit 132 is connected, for example, to an input device such as a mouse and a keyboard.

The output unit 133 is an interface for outputting data. The output unit 133 is connected, for example, to an output device such as a display and a speaker.

The storage unit 134 is a storage device such as a hard disk drive (HDD), a solid state drive (SSD), or an optical disk. Note that the storage unit 134 may be a semiconductor memory capable of rewriting data, such as a random access memory (RAM), a flash memory, or a non volatile static random access memory (NVSRAM). The storage unit 134 stores an operating system (OS) and various programs executed by the analysis device 13.

The control unit 135 controls the entire analysis device 13. The control unit 135 is, for example, an electronic circuit such as a central processing unit (CPU), a micro processing unit (MPU), or a graphics processing unit (GPU), or an integrated circuit such as an application specific integrated circuit (ASIC) or a field programmable gate array (FPGA). In addition, the control unit 135 includes an internal memory for storing programs and control data defining various processing procedures and executes each process using the internal memory.

The control unit 135 functions as various processing units by various programs operating. For example, the control unit 135 includes a determination unit 1351, a sorting unit 1352, and a deletion unit 1353.

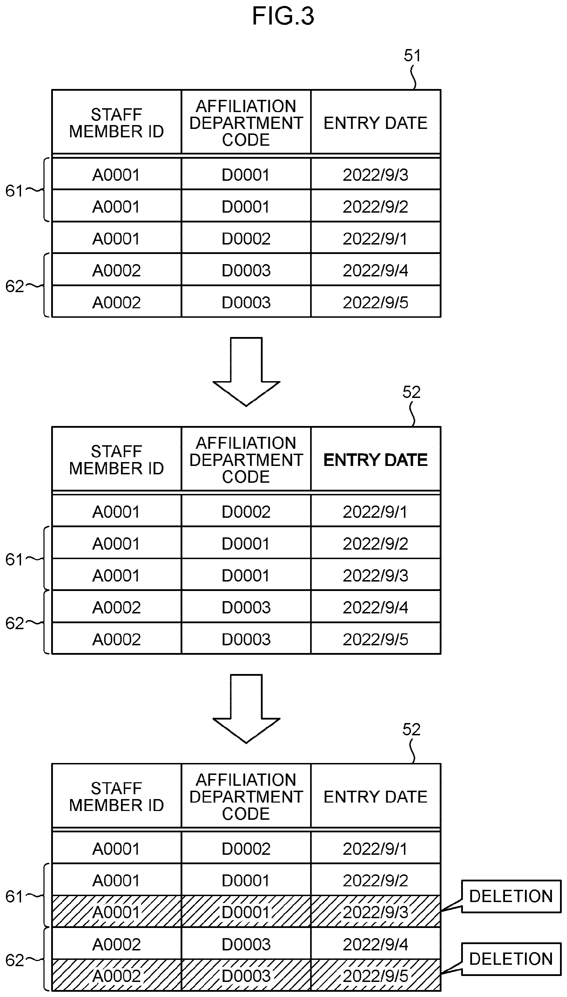

A procedure of overlap deletion is described together with the function of each processing unit of the control unit 135 with reference to FIG. 3. FIG. 3 is a diagram illustrating a procedure of the overlap deletion according to the embodiment. Note that, for the sake of explanation, contents of each table are shown in a state of being readable as a natural language in FIG. 3, but actually, processes illustrated in FIG. 3 are performed by secure computation on the table accumulated in an unreadable share state (for example, a sequence of seemingly meaningless numbers).

A table 51 in FIG. 3 is a table to be subjected to the overlap deletion. Here, the record in which the "staff member ID" column and the "affiliation department code" column (hereinafter, referred to as an overlap deletion key) overlap is deleted except for one. Therefore, a record group 61 and a record group 62 of the table 51 in FIG. 3 are to be subjected to overlap deletion.

The determination unit 1351 determines an overlap deletion key, a sort key, and the order of sorting. The overlap deletion key and the sort key are a set of one or more columns. The sort key is used in sort processing described below.

The determination unit 1351 can determine the overlap deletion key and the sort key in response to a request from the user received via the terminal device 40. However, it is assumed that the overlap deletion key and the sort key are different from each other.

For example, a case where the determination unit 1351 receives a request "Delete records in which the "staff member ID" and the "affiliation department code" overlap, while leaving a record with the oldest "entry date"" is considered. In this case, the determination unit 1351 determines the "staff member ID" column and the "affiliation department code" column as the overlap deletion keys. Also, the determination unit 1351 also determines the "entry date" column as the sort key. In addition, the determination unit 1351 determines a sorting order in ascending order.

Note that, when a record requested to be left is a record having the smallest value (the same meaning as the oldest in the case of date and time), the determination unit 1351 determines the sorting order in ascending order. In contrast, when a record requested to be left is a record having the highest value (the same meaning as the newest in the case of date and time), the determination unit 1351 determines the sorting order in descending order.

The sorting unit 1352 sorts the records of the table 51 including records in which the values of the overlap deletion key overlap by secure computation using the sort key. In addition, the sorting unit 1352 sorts the records of the table in a designated order among the ascending order and the descending order. a table 52 is a table after the sorting unit 1352 sorts the table 51.

The "entry date" column is determined as the sort key by the determination unit 1351, and the sorting order is determined in ascending order. Therefore, the sorting unit 1352 sorts the records of the table 51 in ascending order of the "entry date" column. In this case, as illustrated in the table 52, the record with a smaller value (older date and time) in the "entry date" column is arranged in a higher rank.

The deletion unit 1353 deletes records other than one record at a predetermined position in the set by secure computation for each of the sets of records which overlap deletion keys included in the table 52 in which sorting is performed by the sorting unit 1352 overlap. For example, in the example of FIG. 3, the deletion unit 1353 deletes records other than one record at the highest rank in the set.

Each of the record group 61 and the record group 62 of the table 52 is a set of records in which the overlap deletion keys overlap. The deletion unit 1353 deletes the record positioned at the lowest rank (a record in which a value of the "entry date" column is "2022/9/3") among the records included in the record group 61 and leaves the other records (a record in which a value of the "entry date" column is "2022/9/2").

Note that, in the example of FIG. 3, the records included in the record groups in the sorted table 52 are adjacent to each other, but the records included in the record groups may not be adjacent to each other.

In addition, the deletion unit 1353 may perform deletion so that the deletion unit 1353 leaves the record in the lowest rank instead of the record in the highest rank. In that case, the determination unit 1351 determines the order opposite to the above description. That is, when a record requested to be left is a record having the smallest value (the same meaning as the oldest in the case of date and time), the determination unit 1351 determines the sorting order in descending order. In contrast, when a record requested to be left is a record having the highest value (the same meaning as the newest in the case of date and time), the determination unit 1351 determines the sorting order in ascending order.

A output control unit 1354 outputs the table 52 after deleting the record. Furthermore, the output control unit 1354 may output a result obtained by further performing statistical analysis using the table 52 from which the record has been deleted.

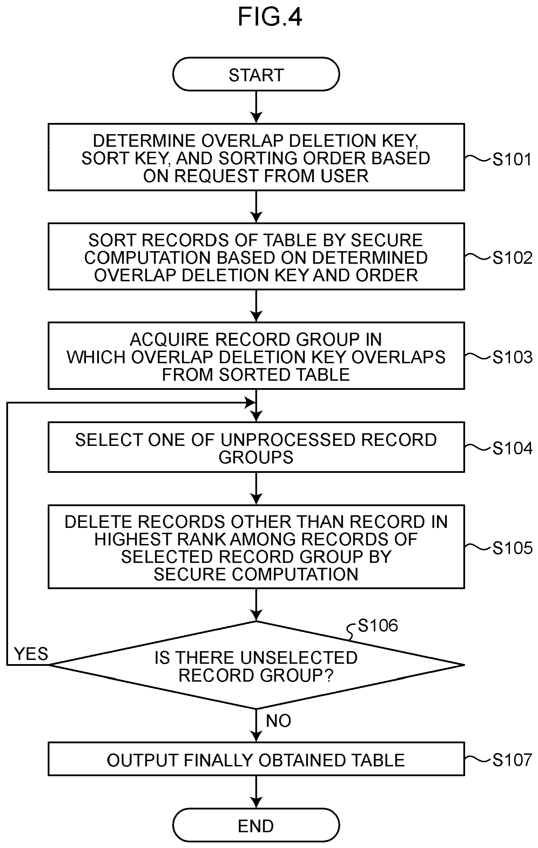

FIG. 4 is a flowchart illustrating a flow of processing of the analysis device according to the embodiment. As illustrated in FIG. 4, first, the analysis device 13 determines the overlap deletion key, the sort key, and the sorting order based on a request from a user (Step S101). The analysis device 13 sorts the records of the table by secure computation based on the determined overlap deletion key and order (Step S102).

Next, the analysis device 13 acquires a record group in which the overlap deletion key is overlapped key from the sorted table (Step S103). Here, the analysis device 13 selects one of the unprocessed record groups (Step S104).

The analysis device 13 deletes records other than the record in the highest rank among the records of the selected record group by secure computation (Step S105).

When there is an unselected record group (Step S106, Yes), the analysis device 13 returns to Step S104 and repeats the processing. When there is no unselected record group (Step S106, No), the analysis device 13 outputs a finally obtained table (Step S107).

### [Effects of Embodiment]

As described above, the analysis device 13 includes the sorting unit 1352 and the deletion unit 1353.. The sorting unit 1352 sorts records of a table including records in which values of the first keys (overlap deletion keys) overlap by secure computation using a second key (sort key) different from the first key. The deletion unit 1353 deletes records other than one record at a predetermined position in the set by secure computation for each of the sets of records in which the first key overlaps included in the table in which sorting is performed by the sorting unit 1352. As a result, the analysis device 13 can designate a record to be left by performing sorting so that the record to be left at the time of overlap deletion is arranged at a predetermined position.

The sorting unit 1352 sorts the records of the table in a designated order among the ascending order and the descending order. Also, the deletion unit 1353 deletes records other than one record at the highest rank or the lowest rank in the set. As a result, the analysis device 13 can arrange a record that is not deleted in the highest rank or the lowest rank in response to the request of the user and delete other records.

### [System Configuration and the Like]

In addition, each component of each illustrated device is functionally conceptual and does not necessarily need to be physically configured as illustrated. That is, a specific form of distribution and integration of each device is not limited to the illustrated form and can be configured by functionally or physically distributing or integrating all or a part thereof in any unit according to various loads, usage conditions, and the like. Furthermore, all or any part of each processing function performed in each device can be embodied by a central processing unit (CPU) and a program analyzed and executed by the CPU or can be embodied as hardware by wired logic. Note that the program may be executed not only by the CPU but also by another processor such as a GPU.

In addition, among the processes described in the present embodiment, all or some of the processes described as being automatically performed can be manually performed, or all or some of the processes described as being manually performed can be automatically performed by a known method. In addition, the processing procedure, the control procedure, the specific name, and the information including various pieces of data and various parameters illustrated in the document and the drawings can be arbitrarily changed unless otherwise specified.

### [Program]

As an embodiment, the analysis device 13 can be implemented by installing an analysis program for executing the above analysis processing as package software or online software in a desired computer. For example, by causing the information processing apparatus to execute the above analysis program, the information processing apparatus can be caused to function as the analysis device 13. The information processing apparatus described here includes a desktop or notebook personal computer. In addition, the information processing apparatus includes mobile communication terminals such as a smartphone, a mobile phone, and a personal handyphone system (PHS), and a slate terminal such as a personal digital assistant (PDA) and the like are included in the category thereof.

Furthermore, the analysis device 13 can also be implemented as an analysis server device that uses, as a client, a terminal device used by the user and provides the client with a service related to the analysis processing. For example, the analysis server device is implemented as a server device that provides an analysis service in which a table to be subjected to overlap deletion is input, and a table subjected to overlap deletion is output.

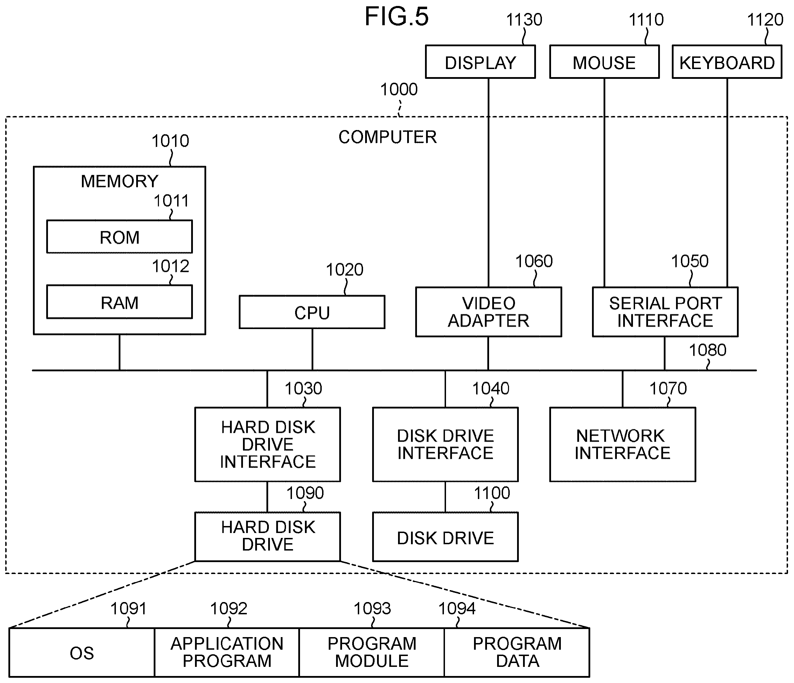

FIG. 5 is a diagram illustrating an example of a computer that executes the analysis program. A computer 1000 includes, for example, a memory 1010 and a CPU 1020. Also, the computer 1000 also includes a hard disk drive interface 1030, a disk drive interface 1040, a serial port interface 1050, a video adapter 1060, and a network interface 1070. These units are connected by a bus 1080.

The memory 1010 includes a read only memory (ROM) 1011 and a random access memory (RAM) 1012. The ROM 1011 stores, for example, a boot program such as a basic input output system (BIOS). The hard disk drive interface 1030 is connected to a hard disk drive 1090. The disk drive interface 1040 is connected to a disk drive 1100. For example, a removable storage medium such as a magnetic disk or an optical disk is inserted into the disk drive 1100. The serial port interface 1050 is connected to, for example, a mouse 1110 and a keyboard 1120. The video adapter 1060 is connected to, for example, a display 1130.

The hard disk drive 1090 stores, for example, an OS 1091, an application program 1092, a program module 1093, and program data 1094. That is, the program that defines each processing of the analysis device 13 is implemented as the program module 1093 in which a code executable by a computer is described. The program module 1093 is stored in, for example, the hard disk drive 1090. For example, the program module 1093 for executing processing similar to the functional configuration in the analysis device 13 is stored in the hard disk drive 1090. Note that the hard disk drive 1090 may be replaced with a solid state drive (SSD).

In addition, the setting data used in the processing of the embodiment described above is stored, for example, in the memory 1010 or the hard disk drive 1090 as the program data 1094. Then, the CPU 1020 reads the program module 1093 and the program data 1094 stored in the memory 1010 and the hard disk drive 1090 to the RAM 1012 as necessary and executes the processing of the embodiment described above.

Note that the program module 1093 and the program data 1094 are not limited to a case of being stored in the hard disk drive 1090 and may be stored in, for example, a detachable storage medium and read by the CPU 1020 via the disk drive 1100 or the like. Alternatively, the program module 1093 and the program data 1094 may be stored in another computer connected via a network (local area network (LAN), wide area network (WAN), and the like). Then, the program module 1093 and the program data 1094 may be read by the CPU 1020 from another computer via the network interface 1070.

### Reference Signs List

- 1: ANALYSIS SYSTEM
- 10: SECURE COMPUTATION SYSTEM
- 11: DATA ACCUMULATION UNIT
- 12: DATA PROCESSING UNIT
- 13: ANALYSIS DEVICE
- 131: COMMUNICATION UNIT
- 132: INPUT UNIT
- 133: OUTPUT UNIT
- 134: STORAGE UNIT
- 135: CONTROL UNIT
- 1351: DETERMINATION UNIT
- 1352: SORTING UNIT
- 1353: DELETION UNIT

## Claims

1. An analysis device comprising:
a sorting unit that sorts records of a table including records in which values of a first key overlap by secure computation using a second key different from the first key; and
a deletion unit that deletes records other than one record at a predetermined position in a set by secure computation for each of the sets of the records which is included in the table subjected to sorting by the sorting unit and in which the first key overlaps.

2. The analysis device according to claim 1, wherein the sorting unit sorts the records in the table in a designated order among ascending order and descending order.

3. The analysis device according to claim 1 or 2,
wherein the deletion unit deletes records other than one record at the highest rank or the lowest rank in the set.

4. An analysis method performed by an analysis device, the method comprising:
a sorting step of sorting records of a table including records in which values of a first key overlap by secure computation using a second key different from the first key; and
a deletion step of deleting records other than one record at a predetermined position in a set by secure computation for each of the sets of the records which is included in the table subjected to sorting in the sorting step and in which the first key overlaps.

5. An analysis program causing a computer to execute processing of:
a sorting step of sorting records of a table including records in which values of a first key overlap by secure computation using a second key different from the first key; and
a deletion step of deleting records other than one record at a predetermined position in a set by secure computation for each of the sets of the records which is included in the table subjected to sorting in the sorting step and in which the first key overlaps.
